# EUROPÄISCHE PATENTSCHRIFT

(11) **EP 2 625 751 B1**
(45) Veröffentlichungstag und Bekanntmachung des Hinweises auf die Patenterteilung: **12.11.2014**
(21) Anmeldenummer: 11776345.8
(22) Anmeldetag: 30.09.2011
(51) Int. Cl.: H01R 13/639

(54) **ELEKTRISCHER LEITUNGSVERBINDER**
ELECTRICAL WIRE CONNECTOR
CONNECTEUR DE FILS ELECTRIQUE

(30) Priorität: 04.10.2010 DE 102010047216
(43) Veröffentlichungstag der Anmeldung: 14.08.2013
(73) Patentinhaber: Phoenix Contact GmbH & Co. KG, 32825 Blomberg (DE)
(72) Erfinder: FRANKE, Jens, 32676 Lügde (DE)
(86) Internationale Anmeldenummer: PCT/EP2011/004926
(87) Internationale Veröffentlichungsnummer: WO 2012/045431

(56) Entgegenhaltungen:
- EP-A1- 1 122 490
- US-A- 3 281 755
- US-A1- 2006 035 509
- US-A1- 2010 029 114

## Beschreibung

Die vorliegende Erfindung betrifft einen Leitungsverbinder wenigstens zweier elektrischer Kabel. Grundsätzlich kann die Erfindung zur Verbindung beliebiger Kabel eingesetzt werden. Ein besonders bevorzugter Anwendungsbereich ist die Verbindung von Solarkabeln, die zur Leitungsübertragung und/oder zur Übertragung von Signalen an Photovoltaikanlagen eingesetzt werden. Bei der Montage von Photovoltaikanlagen müssen die Kabel häufig flexibel verlegt werden. Dabei kann es vorkommen, dass Kabel verlängert oder auch gekürzt werden müssen, um optimal auf beispielsweise dem Dach eines Gebäudes verlegt zu werden.

Leitungsverbinder, welche im Bereich von Photovoltaikanlagen eingesetzt werden, sind oft schwierigen Umweltbedingungen ausgesetzt, da sie oftmals mehr oder weniger ungeschützt im Freien verlegt werden. Deshalb müssen Leitungsverbinder erhöhte Schutzanforderungen erfüllen, um den Schutz von Menschen gegenüber potenzieller Gefährdung bei deren Benutzung sicherzustellen und die Anlage auch selbst zu schützen. Meist wird für solche Leitungsverbinder im Außenbereich wenigstens eine Schutzklasse IP67 gemäß DIN EN 60529 bzw. DIN 40050 Teil 9 gefordert. Das bedeutet, dass ein Schutz gegen den Zugang mit einem Draht und ein staubdichter Verschluss des Leitungsverbinders vorliegen. Weiterhin liegt wenigstens ein Schutz gegen zeitweiliges Untertauchen in Wasser vor. Solche Betriebszustände können beispielsweise bei Regen oder Schnee auftreten.

Eine elektrische Verbindungsanordnung, welche vor schädlichen Umwelteinflüssen schützen soll, ist unter anderem aus der US 2006/0035509 A1 bekannt. Dabei ist ein mehrteiliges Schraubgehäuse vorgesehen, wobei die Abdichtung des Gehäuses gegen z. B. Wasser durch Dichtringe erreicht wird.

Eine weitere wichtige Eigenschaft solcher Leitungsverbinder ist es, einen zuverlässigen Berührschutz zur Verfügung zu stellen.

Da Photovoltaikanlagen oftmals auf den Dächern von Wohngebäuden von Privatpersonen installiert werden, ist es auch erforderlich, den Berührschutz so vorzusehen, dass Privatpersonen nicht unbeabsichtigt die stromführenden Teile berühren können.

Es ist deshalb die Aufgabe der vorliegenden Erfindung, einen Leitungsverbinder zur Verfügung zu stellen, der zwei Kabelenden dicht miteinander verbindet, wobei die Kabelenden vor einer Berührung durch die Hand auch eines unbedarften Benutzers geschützt sind.

Diese Aufgabe wird gelöst durch einen Leitungsverbinder mit den Merkmalen des Anspruches 1. Bevorzugte Weiterbildungen der Erfindung sind Gegenstand der Unteransprüche. Weitere Vorteile und Merkmale der vorliegenden Erfindung ergeben sich aus der Beschreibung des Ausführungsbeispiels.

Der erfindungsgemäße Leitungsverbinder ist mit einem Gehäuse ausgerüstet. Das Gehäuse umfasst eine erste Kabelverschraubung zur Aufnahme eines ersten Kabels, wenigstens eine zweite Kabelverschraubung zur Aufnahme eines zweiten Kabels und wenigstens eine Rohreinrichtung. Es ist wenigstens eine Kontakteinrichtung vorgesehen, an der wenigstens das erste Kabel mit wenigstens dem zweiten Kabel verbindbar ist. Es ist weiterhin wenigstens eine Rasteinrichtung vorgesehen, welche dazu geeignet und ausgebildet ist, beim Verschrauben wenigstens einer Kabelverschraubung mit der Rohreinrichtung die Kontakteinrichtung mit der Kabelverschraubung zu verrasten, sodass die Kabel berührsicher an dem Gehäuse aufgenommen sind. Dabei kann ein Verschrauben der ersten Kabelverschraubung mit dem Gehäuse oder ein Verschrauben der zweiten Kabelverschraubung mit dem Gehäuse oder ein Verschrauben der ersten Kabelverschraubung und der zweiten Kabelverschraubung mit dem Gehäuse erfolgen.

Der erfindungsgemäße Leitungsverbinder hat viele Vorteile, da er einfach aufgebaut ist und einen zuverlässigen Schutz vor Umwelteinflüssen bietet und berührsicher aufgebaut ist. Durch die Rasteinrichtung wird ein erhöhter Schutz gewährleistet, da beim Verschrauben der entsprechenden Kabelverschraubung mit dem Gehäuse ein Rastzustand auftritt, der von Hand nicht wieder gelöst werden kann.

Insbesondere kann die Rasteinrichtung so ausgebildet sein, dass nach dem Einrasten ein zerstörungsfreies Öffnen nicht möglich ist. Dadurch wird ein besonders hoher Schutz erzielt, da eine unbedarfte Person, die den Leitungsverbinder in die Hand nimmt, den Leitungsverbinder nicht soweit öffnen kann, dass die Person berührenden Kontakt zu den Kabelenden erhält.

Vorzugsweise umfasst das Gehäuse wenigstens eine Rohreinrichtung, in der die Kontakteinrichtung verdrehsicher und berührsicher aufnehmbar ist. Das bedeutet, dass die Rohreinrichtung die Kontakteinrichtung insbesondere vollständig aufnimmt. Ist die Rohreinrichtung beispielsweise zylindrisch ausgebildet, so schützt die Rohreinrichtung einen berührenden Kontakt der Kontakteinrichtung über den gesamten Umfang des Zylinders, sodass nur die gegebenenfalls offenen Stirnseiten der Rohreinrichtung noch geschützt werden müssen.

Insbesondere besteht die Rohreinrichtung aus einem nicht leitenden Material, welches beispielsweise Kunststoff ist. Die Rohreinrichtung kann nicht nur zylindrisch ausgebildet sein, sondern kann auch einen beispielsweise rechteckigen Außenquerschnitt aufweisen.

Auch andere mehreckige Querschnitte oder elliptische Querschnitte oder dergleichen sind möglich. Der Innenquerschnitt der Rohreinrichtung ist insbesondere derart gestaltet, dass die Kontakteinrichtung verdrehsicher im Inneren der Rohreinrichtung aufnehmbar ist. Möglich ist es beispielsweise, dass zur Montage die Rohreinrichtung über ein Kabelende geschoben wird und anschließend die Kabelenden an der Kontakteinrichtung miteinander verbunden werden, und dass anschließend die Rohreinrichtung über die Kontakteinrichtung geschoben wird, bis sie die Kontakteinrichtung verdrehsicher im Inneren aufnimmt.

Eine solche Ausgestaltung mit einer Rohreinrichtung, die die Kontakteinrichtung verdrehsicher und berührsicher aufnimmt, hat erheblich Vorteile. Insbesondere wird auch die Konstruktion eines kleinbauenden Leitungsverbinders ermöglicht, der nur wenig Raumbedarf erfordert. Dadurch wird die Verlegung eines Leitungsverbinders auch in dünnen Profilen oder in schmalen Nuten ermöglicht, die sich beispielsweise auf Dächern oder an Fassaden ergeben. Großbauende Leitungsverbinder aus dem Stand der Technik können dort oftmals nicht eingesetzt werden, da der zur Verfügung stehende Raum nicht immer ausreicht. Der erfindungsgemäße Leitungsverbinder bietet hier erhebliche Vorteile, da er flexibel und bedarfsgerecht aufgebaut ist.

Vorzugsweise ist die Rohreinrichtung mit der ersten oder der zweiten Kabelverschraubung versehen. Das bedeutet insbesondere, dass die Rohreinrichtung fest mit der ersten oder der zweiten Kabelverschraubung verbunden ist. Möglich ist es, dass die Rohreinrichtung einstückig mit einer Kabelverschraubung ausgebildet ist.

Vorteilhafterweise ist die Kontakteinrichtung als Kontaktträger ausgebildet. Der Kontaktträger kann eine Mehrzahl von Kontakten aufweisen, die zur Verbindung mehradriger Kabel vorgesehen sind.
Vorzugsweise weist die Rasteinrichtung wenigstens eine Rasteinheit an dem Kontaktträger und wenigstens eine damit zusammenwirkende Rasteinheit an wenigstens einer Kabelverschraubung auf. Die miteinander zusammenwirkenden Rasteinheiten an dem Kontaktträger bzw. der Kontakteinheit und an der Kabelverschraubung ermöglichen eine einfache Montage, bei der nach dem Verrasten der Rasteinheiten der Rasteinrichtung ein selbstständiges Lösen nicht mehr möglich ist. Zum Lösen der Verbindung und zum Öffnen des Leitungverbinders muss die Rasteinrichtung wieder gelöst werden, was in bestimmten Ausgestaltungen nur durch eine reversible Verformung oder eine Beschädigung oder sogar Zerstörung einer der Rasteinheiten möglich ist. Dadurch wird ein zuverlässiger Schutz vor einem unbeabsichtigten Öffnen gewährleistet, da zunächst eine solche Kraft aufgewendet werden muss, die eine Rasteinheit verformt, beschädigt oder gar zerstört.

Vorzugsweise ist wenigstens eine Rasteinheit als Sternverzahnung ausgebildet. Möglich ist es, dass die Rasteinheit an dem Kontaktträger und/oder die Rasteinheit an der Kabelverschraubung als Sternverzahnung ausgebildet ist. Möglich ist es auch, dass nur eine der beiden Rasteinheiten als Sternverzahnung ausgebildet ist, während die andere Rasteinheit Rastzähne oder dergleichen aufweist, die mit der anderen Sternverzahnung zusammen wirken.

Vorteilhafterweise weist wenigstens eine Sternverzahnung elastisch ausgebildete Zähne auf. Die elastisch ausgebildeten Zähne sind insbesondere an der Kontakteinrichtung und vorzugsweise an dem Kontaktträger ausgebildet. Die elastisch ausgebildeten Zähne können aus einem Kunststoff- oder einem Metallmaterial bestehen und in die Raststellung vorgespannt sein. Bei der Kabelverschraubung mit dem Gehäuse gerät die Stirnverzahnung des Kontaktträgers in Kontakt mit der Stirnverzahnung der Kabelverschraubung, wobei die elastisch ausgebildeten Zähne bei dem Verschraubungsvorgang vorzugsweise elastisch zurück schwenken. Ein wieder Losdrehen der Kabelverschraubung ist anschließend nicht möglich, da die beiden Stirnverzahnungen ineinander eingreifen und keine oder nur eine sehr geringe Kraftkomponente vorliegt, die die elastisch ausgebildeten Zähne wieder außer Eingriff mit der Stirnverzahnung bringt.

In bevorzugten Ausgestaltungen weist der Kontaktträger wenigstens einen Kontakt auf, der einer Gruppe von Kontakten entnommen ist, die Schraubkontakte, Klemmkontakte, Steckkontakte, Lötkontakte und dergleichen mehr umfasst.

In einer konkreten Ausgestaltung ist wenigstens ein Kontakt als Schraubkontakt ausgeführt. Es ist ebenso möglich, dass die Kontakte als Klemmkontakte ausgeführt sind oder dass die einzelnen Adern der mit einander zu verbindenden Kabeln miteinander verlötet sind.

In bevorzugten Ausgestaltungen ist der Kontaktträger auf beiden Seiten mit einer Stirnverzahnung ausgerüstet. Insbesondere ist der Kontaktträger seitensymmetrisch aufgebaut.

Ein seitensymmetrischer Kontaktträger, der auf beiden Seiten mit einer Stirnverzahnung ausgerüstet ist hat viele Vorteile, da es ermöglicht wird, den Leitungsverbinder nach einem erstmaligen Verrasten wieder zu öffnen und den Kontaktträger erneut wieder zu verwenden, auch wenn die Rasteinheit an der Stirnseite beim Öffnen beschädigt wurde. Der Kontaktträger kann dann umgedreht wieder eingebaut werden und die Stirnverzahnung an der anderen Seite kann zu einem rastenden Eingriff mit einer entsprechenden Kabelverschraubung dienen.

Außerdem erleichtert ein spiegelsymmetrisch aufgebauter Kontaktträger die Montage, da man bei der Montage nicht darauf achten muss, welche Seite des Kontaktträgers zu welcher Seite hin ausgerichtet ist.

Möglich ist es auch, dass auf beiden Seiten der Rohreinrichtung eine Kabelverschraubung aufgeschraubt wird, die entsprechend mit einer Stirnverzahnung des Kontaktträgers verrastet.

In allen Ausgestaltungen kann das Kabel 2 oder mehr und insbesondere auch 5, 8, 10 oder 12 oder eine andere Anzahl von Adern umfassen. In allen Ausgestaltungen weisen die Kabelverschraubungen auf den voneinander abgewandten Seiten vorzugsweise Gewinde auf, um dort mit entsprechenden Muttern verschraubt zu werden. Bei der Verschraubung der Mutter mit der entsprechenden Kabelverschraubung erfolgt eine klemmende Aufnahme des aufgenommenen Kabels an der Kabelverschraubung. Zur Abdichtung ist im Inneren der Kabelverschraubung vorzugsweise eine Dichtung vorgesehen, die insbesondere aus einem gummielastischen Material oder dergleichen besteht.

Zur Montage wird eine Mutter und die entsprechende Kabelverschraubung bzw. Rohreinrichtung mit dazugehöriger Kabelverschraubung auf ein Kabelende aufgeschoben und die beiden Kabelenden werden an dem Kontaktträger miteinander verbunden. Anschließend wird von der einen Seite die eine Kabelverschraubung und von der anderen Seite die andere Kabelverschraubung ggf. mit der Rohreinrichtung auf den Kontaktträger geschoben, so dass der Kontaktträger verdrehsicher innerhalb der Rohreinrichtung aufgenommen ist. Anschließend wird die oder es werden die Kabelverschraubungen mit der Rohreinrichtung verschraubt. Im diesem Zustand ist der Kontaktträger schon berührsicher an dem Gehäuse aufgenommen. Da die Kabelverschraubung an dem Kontaktträger eingerastet ist, ist ein Öffnen des Gehäuses ohne weiteres nicht möglich. Insbesondere kann es ohne Werkzeug von Hand praktisch nicht gelingen, das Gehäuse wieder zu öffnen, so dass ein sehr zuverlässiger Schutz vor Berührung der Aderenden auch für unbedarfte Personen vorliegt.

Im Anschluss an die Verschraubung der Kabelverschraubung mit der Rohreinrichtung werden die Muttern an den Enden der Kabelverschraubungen mit den Kabelverschraubungen verschraubt, so dass die Kabelenden klemmend und abgedichtet an den Kabelverschraubungen aufgenommen werden.

Der erfindungsgemäße Leitungsverbinder stellt eine einfach zu montierende Verbindung wenigstens zweier Kabel zur Verfügung, wobei der Leitungsverbinder insbesondere aus vier einfachen Kunststoffteilen und einem Kontaktträger zur Verbindung der Kabelenden der miteinender zu verbindenden Kabel bestehen kann. Der Aufbau ist kleinbauend und die Montage kann einfach und ohne Spezialwerkzeug erfolgen.

Weitere Vorteile und Merkmale der vorliegenden Erfindung ergeben sich aus der Beschreibung des Ausführungsbeispiels.

In den Figuren zeigen:
- Fig. 1: eine schematische Explosionsdarstellung eines erfindungsgemäßen Leitungsverbinders;
- Fig. 2: einen Querschnitt durch einen Leitungsverbinder nach Fig. 1;
- Fig. 3: eine perspektivische Ansicht eines Kontaktträgers des Leitungsverbinders nach Fig. 1;
- Fig. 4: eine Draufsicht auf die Rohreinrichtung des Leitungsverbinders nach Fig. 1;
- Fig. 5: eine perspektivische Ansicht einer Kabelverschraubung des Leitungsverbinders nach Fig. 1;
- Fig. 6: eine mit dem Kontaktträger verrastete Kabelverschraubung des Leitungsverbinders nach Fig. 1.

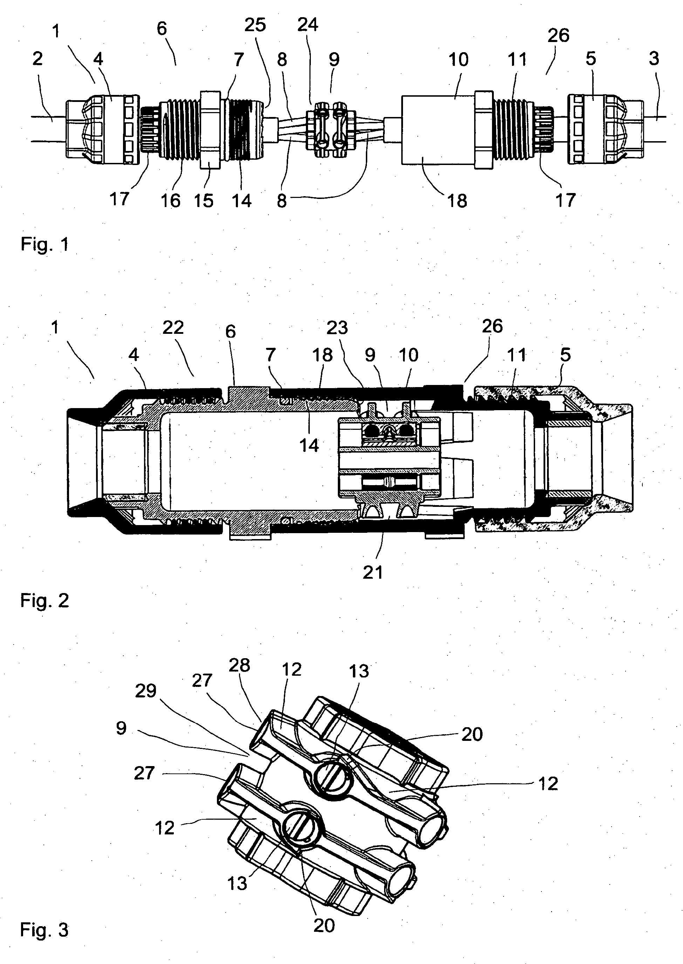

Mit Bezug auf die beiliegenden Figuren 1 bis 6 wird im Folgenden ein Ausführungsbeispiel eines erfindungsgemäßen Leitungsverbinders 1 erläutert, wobei in Fig. 1 eine schematische Explosionsdarstellung des Leitungsverbinders 1 abgebildet ist. Der Leitungsverbinder 1 dient zur Verbindung zweier Kabel 2 und 3, die jeweils eine Mehrzahl einzelner Adern 8 umfassen.

Der elektrische Kontakt der einzelnen Adern 8 wird an der als Kontaktträger 29 ausgebildeten Kontakteinrichtung 9 hergestellt.

Dazu sind hier an dem Kontaktträger 29 Schraubkontakte vorgesehen, wobei die einzelnen Adern 8 über Schrauben 13 an dem Kontaktträger 29 klemmend befestigt und somit elektrisch miteinander verbunden werden.

Der gesamte Leitungsverbinder 1 besteht hier aus dem Kontaktträger 29, sowie einer Rohreinrichtung 10 und Kabelverschraubungen 6 und 26, sowie zwei Muttern 4 und 5, die an den beiden Enden des Leitungsverbinders 1 auf die jeweiligen Kabelverschraubungen 6 und 26 aufgeschraubt werden, um die Enden der Kabel 2 und 3 gegenüber dem Leitungsverbinder abzudichten und die Kabel 2 und 3 klemmend an dem Leitungsverbinder 1 aufzunehmen.

An den Kabelverschraubungen 6 und 26 sind Dichtlamellen 17 vorgesehen, die beim Aufschrauben der Muttern 4 und 5 auf die Kabelverschraubungen 6 und 26 seitlich verbogen werden und somit im Inneren der Kabelverschraubungen 6 und 26 vorgesehene Dichtungen 30 dichtend gegen die Kabelenden der Kabel 2 und 3 klemmen. Die aus einer gummielastischen Masse bestehenden Dichtungen verformen sich elastisch und klemmen die Kabel 2 und 3 dauerhaft fest innerhalb der Kabelverschraubungen 6 und 26.

Die Kabelverschraubung 6 umfasst an der dem Kontaktträger 29 zugewandten Seite ein Außengewinde 14 und an dem dem Kabel 2 zugeordneten Ende ein Außengewinde 16, auf welches die Mutter 4 aufgeschraubt wird. Eine Schlüsselfläche 15 ist an der Kabelverschraubung 6 vorgesehen, um mit einem Werkzeug gegriffen zu werden. Eine Dichteinrichtung 7 in Form beispielsweise eines O-Rings dichtet die in die Rohreinrichtung 10 eingeschraubte Kabelverschraubung 6 radial nach außen ab, sodass das Innere der Rohreinrichtung 10 vor dem Eintritt von Staub und Feuchtigkeit geschützt ist.

Die andere Kabelverschraubung 26 ist hier fest mit der Rohreinrichtung 10 verbunden und kann beispielsweise einstückig mit der Rohreinrichtung 10 gefertigt sein. Ein Innengewinde 18 an der Rohreinrichtung 10 dient zur Verschraubung mit dem Außengewinde 14 der Kabelverschraubung 6.

An dem Kabel 3 zugewandten Ende weist die Kabelverschraubung 26 ein Außengewinde 11 auf, auf welches die Mutter 5 aufgeschraubt wird, um das Kabel 3 an der Kabelverschraubung 26 über die hier in Fig. 1 nicht sichtbare Dichtung 30 klemmend aufzunehmen.

Fig. 2 zeigt einen Querschnitt des Leitungsverbinders 1 im zusammen montierten Zustand ohne angeschlossenem Kabel 2 und 3.

Der Kontaktträger 29 ist im Inneren der Rohreinrichtung 10, die einstückig mit der Kabelverschraubung 26 ausgebildet ist, aufgenommen. Dabei ist der Kontaktträger 29 verdrehsicher im Inneren der Rohreinrichtung 10 aufgenommen. Im Fig. 2 sind auch die Dichtungen 30 im Inneren der Schraubverbindungen 6 und 26 erkennbar, die beim Aufschrauben der Muttern 4 und 5. mit den Kabeln 2 und 3 verpresst werden, um an den Enden des Leitungsverbinders 1 eine staub- und wasserdichte Durchführung der Kabel 2 und 3 zu ermöglichen und zu gewährleisten.

Fig. 3 zeigt eine perspektivische Darstellung des Kontaktträgers 29, wobei die einzelnen Schrauben 13 der Kontakte 27 erkennbar sind. Die Kontakte 27 sind hier als Schraubkontakte 28 ausgeführt.

An den Stirnseiten des Kontaktträgers 29 sind Stirnverzahnungen 12 vorgesehen, die über elastisch ausgebildete Zähne 20 verfügen und die an jeder Stirnseite des Kontaktträgers 29 jeweils eine Rasteinheit 24 bilden.

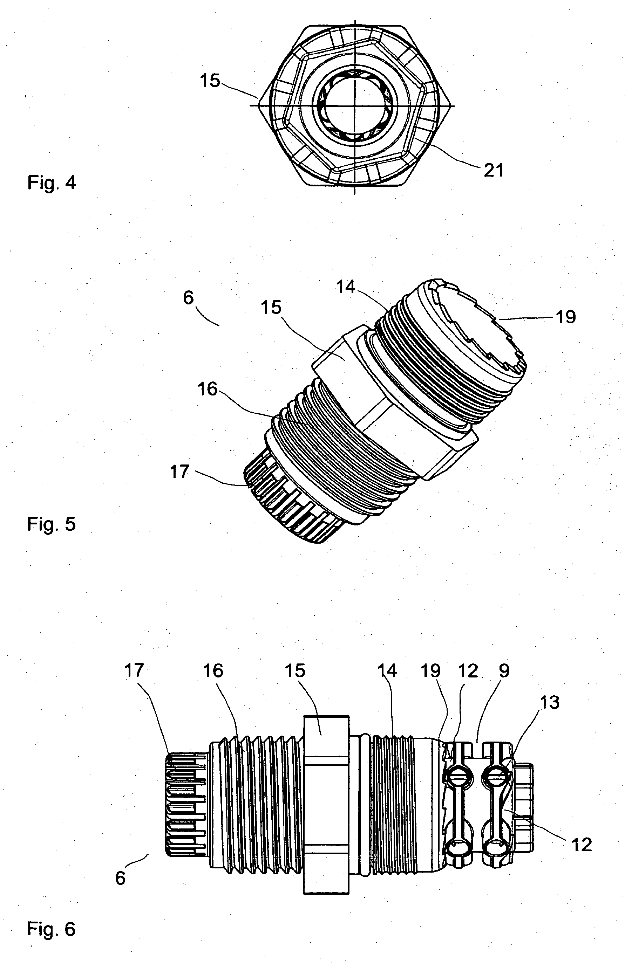

Fig. 4 zeigt eine Draufsicht auf das Innere der Rohreinrichtung 10, wobei an der Außenseite die Schlüsselflächen 15 sichtbar sind. Eine Innenkontur 21 dient als eine Verdrehsicherung für den Kontaktträger 29.

Fig. 5 zeigt in einer vergrößerten perspektivischen Darstellung die Kabelverschraubung 6, die an dem Kabelende zugewandten Ende die Dichtlamellen 17 aufweist. Das Außengewinde 16 dient zur Verschraubung der Mutter 4. Die Schlüsselflächen 15 können mit einer Zange oder einem Schraubenschlüssel oder einem sonstigen Werkzeug gegriffen werden, um die Kabelverschraubung 6 definiert zu drehen. Das Außengewinde 14 dient zum Verschrauben mit dem Innengewinde 18 der Rohreinrichtung 10.

Weiterhin ist in Fig. 5 klar die Stirnverzahnung 19 erkennbar, die an der Stirnseite des Außengewindes 14 in axialer Richtung vorgesehen ist. Im zusammengebauten Zustand, so wie er in Fig. 2 im Schnitt oder in Fig. 6 dargestellt ist, greift die Stirnverzahnung 19 als Rasteinheit 25 in die Stirnverzahnung 12 als Rasteinheit 24 ein. Nach verfolgter Verschraubung der Kabelverschraubung 6 mit der Rohreinrichtung 10 verrasten beide Komponenten miteinander und können nur unter Einwirkung erheblicher Kraft wieder voneinander getrennt werden. In der Regel erfordert dies eine Zerstörung der Rasteinheit 24 an dem Kontaktträger 29, sodass der Leitungsverbinder 1 im zusammengebauten Zustand vor unbeabsichtigtem Öffnen geschützt ist.

Zwar ist es möglich, die Muttern 4 und 5 von den Enden des Leitungsverbinders 1 abzuschrauben, aber auch dann sind die Kontakte an dem Kontaktträger 29 nicht mit der Hand oder dergleichen zugänglich, da sie im Inneren des Leitungsverbinders 1 geschützt aufgenommen sind. Insgesamt bilden die Kabelverschraubungen 6 und 26 mit der Rohreinrichtung 10 ein Gehäuse 22, welches den Kontaktträger 29 zuverlässig umgibt. Zur weiteren Öffnung des Leitungsverbinders 1 ist Werkzeug nötig. Das bedeutet, dass ein unbeabsichtigtes Öffnen per Hand praktisch nicht möglich ist.

Zur Montage werden die zu verbindenden Leitungsenden der Kabel abgemantelt und die einzelnen Adern 8 werden abisoliert. Das eine Kabelende wird durch die Mutter 5 und durch die Rohreinrichtung 10 gesteckt. Die Adern 8 werden an der einen Seite des Kontaktträgers 29 angeschlossen. Danach wird das andere Kabel durch die Mutter 4 und die Kabelverschraubung 6 gesteckt und ebenfalls an den Kontaktträger 29 angeschlossen. Anschließend wird der Kontaktträger 29 durch Ziehen am Kabel 3 in die Rohreinrichtung 10 gezogen und durch das Anschrauben der Mutter 5 fixiert. Als nächstes wird die Kabelverschraubung 6 in die Rohreinrichtung 10 geschraubt. Zum Schluss wird die Mutter 4 auf die Kabelverschraubung 6 geschraubt.

Insgesamt besteht der Leitungsverbinder 1 nur aus wenigen verschiedenen Kunststoffteilen, sodass eine einfache und kostengünstige Produktion ermöglicht wird. Die Montage ist einfach und zuverlässig und erlaubt durch die Verrastung der Komponenten einen hohen Schutz vor unbeabsichtigter Berührung. Die gesamte Konstruktion ist kleinbauend und kann flexibel auch an engen Stellen eingesetzt werden. Zur Verarbeitung ist kein Spezialwerkzeug nötig, welches oftmals bei der Montage von Photovoltaikanlagen auf Dächern und dergleichen nicht vorhanden ist.

Durch die federnde Anbringung der Zähne 20 der Stirnverzahnung 12 im Bereich der Schraubentrichter der Schrauben 13 des Kontaktträgers 29 wird ein flexibles Ausweichen der Zähne beim Verschrauben ermöglicht. Einem anschließenden Aufschrauben widersetzen sich die Zähne, sodass ein zuverlässiger Schutz erzielt wird.

### Bezugszeichenliste

- Leitungsverbinder: 1
- Kabel: 2
- Kabel: 3
- Mutter: 4
- Mutter: 5
- Kabelverschraubung: 6
- Dichteinrichtung, O-Ring: 7
- Ader: 8
- Kontakteinrichtung: 9
- Rohreinrichtung: 10
- Gewinde: 11
- Stirnverzahnung: 12
- Schraube: 13
- Außengewinde: 14
- Schlüsselfläche: 15
- Außengewinde: 16
- Dichtlamellen: 17
- Innengewinde: 18
- Stirnverzahnung: 19
- Zahn: 20
- Innenkontur: 21
- Gehäuse: 22
- Rasteinrichtung: 23
- Rasteinheit: 24
- Rasteinheit: 25
- Kabelverschraubung: 26
- Kontakt: 27
- Schraubkontakt: 28
- Kontaktträger: 29
- Dichtung: 30

## Patentansprüche

1. Leitungsverbinder (1) mit einem Gehäuse (22),welches eine erste Kabelverschraubung (6) zur Aufnahme eines ersten Kabels (2) und eine zweite Kabelverschraubung (26) zur Aufnahme eines zweiten Kabels (3) und wenigstens eine Rohreinrichtung (10) umfasst, wobei wenigstens eine Kontakteinrichtung (9) vorgesehen ist, an der wenigstens das erste (2) mit dem zweiten Kabel (3) verbindbar ist,
**dadurch gekennzeichnet,**
**dass** wenigstens eine Rasteinrichtung (23) vorgesehen ist, welche dazu geeignet und ausgebildet ist, beim Verschrauben wenigstens einer Kabelverschraubung (6, 26) mit der Rohreinrichtung (10) die Kontakteinrichtung (9) mit der Kabelverschraubung (6, 26) zu verrasten, sodass die Kabel (2, 3) berührsicher an dem Gehäuse (22) aufgenommen sind.

2. Leitungsverbinder nach Anspruch 1, wobei die Kontakteinrichtung (9) in der Rohreinrichtung (10) verdrehsicher und berührsicher aufnehmbar ist.

3. Leitungsverbinder (1) nach Anspruch 1 oder 2, wobei die Rohreinrichtung (10) mit der ersten oder zweiten Kabelverschraubung (6, 26) versehen ist.

4. Leitungsverbinder (1) nach einem der vorhergehenden Ansprüche, wobei die Kontakteinrichtung (9) als Kontaktträger (29) ausgebildet ist.

5. Leitungsverbinder (1) nach einem der vorhergehenden Ansprüche, wobei die Rasteinrichtung (23) wenigstens eine Rasteinheit (24) an dem Kontaktträger (29) und wenigstens eine damit zusammenwirkende Rasteinheit (25) an wenigstens einer Kabelverschraubung (6, 26) aufweist.

6. Leitungsverbinder (1) nach einem der vorhergehenden Ansprüche, wobei die Rasteinheit (24) an dem Kontaktträger (29) als Stirnverzahnung (12) ausgebildet ist.

7. Leitungsverbinder (1) nach einem der vorhergehenden Ansprüche, wobei die Rasteinheit (25) an der Kabelverschraubung (6) als Stirnverzahnung (19) ausgebildet ist.

8. Leitungsverbinder (1) nach einem der vorhergehenden Ansprüche, wobei wenigstens eine Stirnverzahnung (12, 19) elastisch ausgebildete Zähne (20) umfasst.

9. Leitungsverbinder (1) nach einem der vorhergehenden Ansprüche, wobei der Kontaktträger (6, 26) wenigstens einen Kontakt (27) aufweist, der einer Gruppe von Kontakten entnommen ist, die Schraubkontakte (28), Klemmkontakte, Lötkontakte und Steckkontakte umfasst.

10. Leitungsverbinder (1) nach einem der vorhergehenden Ansprüche, wobei der Kontaktträger (29) auf beiden Seiten mit einer Stirnverzahnung (12) ausgerüstet ist und insbesondere seitensymmetrisch aufgebaut ist.

11. Leitungsverbinder (1) nach einem der vorhergehenden Ansprüche, wobei wenigstens ein Kabel (2, 3) wenigstens zwei Adern (8) umfasst.

## Claims

1. A cable connector (1) with a housing (22), comprising a first screwed cable gland (6) for receiving a first cable (2) and a second screwed cable gland (26) for receiving a second cable (3) and comprising at least one tube device (10), wherein at least one contact device (9) is also provided at which at least the first cable (2) can be connected to the second cable (3),
**characterized in**
**that** at least one detent device (23) is provided, which is suitable for and designed for latching the contact device (9) to the screwed cable gland (6, 26) when at least one of the screwed cable glands (6, 26) is screwed to the tube device (10), such that the cables (2, 3) are received on the housing (22) in a contact-safe manner.

2. The cable connector according to claim 1, wherein the contact device (9) can be received in the tube device (10) in a torsion-proof and contact-safe manner.

3. The cable connector (1) according to claim 1 or 2, wherein the tube device (10) is provided with the first or second screwed cable gland (6, 26).

4. The cable connector (1) according to any one of the previous claims, wherein the contact device (9) is implemented as a contact carrier (29).

5. The cable connector (1) according to any one of the previous claims, wherein the detent device (23) comprises at least one latching unit (24) on the contact carrier (29) and at least one latching unit (25) interacting therewith on at least one screwed cable gland (6, 26).

6. The cable connector (1) according to any one of the previous claims, wherein the latching unit (24) on the contact carrier (29) is implemented as a spur gear (12).

7. The cable connector (1) according to any one of the previous claims, wherein the latching unit (25) on the screwed cable gland (6) is implemented as a spur gear (19).

8. The cable connector (1) according to any one of the previous claims, wherein at least one spur gear (12, 19) comprises elastically designed teeth (20).

9. The cable connector (1) according to any one of the previous claims, wherein the contact carrier (6, 26) has at least one contact (27), drawn from the group of contacts which comprises screw contacts (28), clamp contacts, solder contacts and pluggable contacts.

10. The cable connector (1) according to any one of the previous claims, wherein the contact carrier (29) is equipped on both sides with a spur gear (12) and in particular is constructed with transverse symmetry.

11. The cable connector (1) according to any one of the previous claims, wherein at least one cable (2, 3) comprises at least two wire cores (8).

## Revendications

1. Connecteur (1) avec un boîtier (22), lequel comprend un premier passe-câble à vis (6) pour recevoir un premier câble (2) et un deuxième passe-câble à vis (26) pour recevoir un deuxième câble (3) et au moins un dispositif de conduit (10), au moins un dispositif de contact (9) étant prévu, au niveau duquel il est possible de relier le premier câble (2) au deuxième câble (3),
**caractérisé**
**en ce qu'**au moins un dispositif d'encliquetage est prévu lequel convient, et est étudié pour, lors du vissage d'au moins un passe-câble à vis (6, 26) avec le dispositif de conduit (10), pour mettre en prise le dispositif de contact (9) avec le passe-câble à vis (6, 26) de sorte que les câbles (2, 3) sont reçus au niveau du boîtier (22) en étant protégés de tout effleurement.

2. Connecteur selon la revendication 1, dans lequel le dispositif de contact (9) peut être reçu de manière protégée contre la torsion et l'effleurement dans le dispositif de conduit (10).

3. Connecteur (1) selon la revendication 1 ou 2, dans lequel le dispositif de conduit (10) est muni du premier ou deuxième passe-câble à vis (6, 26).

4. Connecteur (1) selon l'une des revendications précédentes, dans lequel le dispositif de contact (9) est réalisé en tant que support de contact (29).

5. Connecteur (1) selon l'une des revendications précédentes, dans lequel le dispositif d'encliquetage (23) présente au moins une unité d'encliquetage (24) sur le support de contact (29) et au moins une unité d'encliquetage (25) coopérant avec celle-ci sur au moins un passe-câble à vis (6, 26).

6. Connecteur (1) selon l'une des revendications précédentes, dans lequel l'unité d'encliquetage (24) sur le support de contact (29) est réalisée en tant que denture frontale (12).

7. Connecteur (1) selon l'une des revendications précédentes, dans lequel l'unité d'encliquetage (25) sur le passe-câble à vis (6) est réalisée en tant que denture frontale (19).

8. Connecteur (1) selon l'une des revendications précédentes, dans lequel au moins une denture frontale (12, 19) comprend des dents (20) réalisées de manière élastique.

9. Connecteur (1) selon l'une des revendications précédentes, dans lequel le support de contact (6, 26) présente au moins un contact (27), lequel provient d' un groupe de contacts comprenant des contacts à vis (28), des contacts de serrage, des contacts de brasage et des contacts enfichables.

10. Connecteur (1) selon l'une des revendications précédentes, dans lequel le support de contact (29) est équipé des deux côtés avec une denture frontale (12) et est en particulier formé avec une symétrie des côtés.

11. Connecteur (1) selon l'une des revendications précédentes, dans lequel au moins un câble (2, 3) comprend au moins deux brins (8).
